(19) Europäisches Patentamt
European Patent Office
Office européen des brevets

(11) **EP 3 410 060 A1**

(12) **EUROPÄISCHE PATENTANMELDUNG**

(43) Veröffentlichungstag:
**05.12.2018 Patentblatt 2018/49**

(51) Int Cl.:
*G01B 7/16* (2006.01)     *G01L 1/18* (2006.01)

(21) Anmeldenummer: **17173327.2**

(22) Anmeldetag: **29.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **voestalpine Stahl GmbH**
**4020 Linz (AT)**

(72) Erfinder:
• **Ossberger, Gerald**
**4060 Leonding (AT)**

• **Gstöttenbauer, Norbert**
**4209 Engerwitzdorf (AT)**
• **Jakoby, Bernhard**
**4040 Linz (AT)**
• **Hilber, Wolfgang**
**4262 Leopoldschlag (AT)**
• **Sell, Johannes**
**4030 Linz (AT)**
• **Enser, Herbert**
**4040 Linz (AT)**

(74) Vertreter: **Jell, Friedrich**
**Bismarckstrasse 9**
**4020 Linz (AT)**

(54) **DEHNUNGSMESSSTREIFEN UND METALLBAND MIT EINER BESCHICHTUNG FÜR SOLCH EINEN DEHNUNGSMESSSTREIFEN**

(57) Es wird ein Dehnungsmessstreifen (1, 100) und ein Metallband mit einer Beschichtung für solch einen Dehnungsmessstreifen (1, 100), mit einem ersten Messgitter (2, 102), mit einem zweiten Messgitter (3, 103) und mit einem Substrat (4), auf dem diese beiden Messgitter (2, 3 bzw. 102, 103) in einer gemeinsamen Ebene (9) angeordnet sind, gezeigt. Um einen kostengünstigen und gegenüber einer Temperaturstörgröße robust in den Messergebnissen kompensierbaren Dehnungsmessstreifen (1, 100) zu ermöglichen, wird vorgeschlagen, dass das Substrat (4) eine metallische Schicht (5) und eine elektrisch isolierende Schicht (6) aufweist, auf welche elektrisch isolierende Schicht (6) diese beiden aus einem piezoresistiven Material (10.1, 10.2) bestehen Messgitter (2, 3 bzw. 102, 103) aufgedruckt sind.

EP 3 410 060 A1

**Beschreibung**

Die Erfindung betrifft einen Dehnungsmessstreifen mit einem ersten Messgitter, mit einem zweiten Messgitter und mit einem Substrat, auf dem diese beiden Messgitter in einer gemeinsamen Ebene angeordnet sind.

Folien-Dehnungsmessstreifen mit mehreren Messgittern auf einem gemeinsamen Substrat lateral nebeneinander vorzusehen, ist aus dem Stand der Technik bekannt. Deren Messgitter können gleiche oder verschiedene Orientierungsrichtungen aufweisen, wobei Letzteres auch unter DMS-Rosetten bekannt ist. Allen Folien-Dehnungsmessstreifen ist ein Messgitter aus einem Widerstandselement gemeinsamen, das beispielsweise aus einer Konstantan-Folie mittels eines Ätzverfahrens erzeugt wird, welche Konstantan-Folie vorher auf ein Kunststoff-Substrat auf laminiert worden ist. Derartige Folien-Dehnungsmessstreifen sind in der Herstellung vergleichsweise aufwendig und fordern zudem - aufgrund des Ätzverfahrens - relativ weit voneinander beabstandete Messgitter, um Kurzschlüsse zwischen den Widerstandselementen zu vermeiden.

Des Weiteren müssen derart hergestellte Folien-Dehnungsmessstreifen mit dem Prüfobjekt, dessen Dehnungszustand gemessen werden soll, mechanisch verbunden, nämlich aufgeklebt, werden. Nachteilig kann die Kleberschicht dazu führen, dass die tatsächliche Dehnung des Prüfobjekts nicht hinreichend an den Dehnungsmessstreifen übertragen wird.

Die Erfindung hat sich daher die Aufgabe gestellt, einen Dehnungsmessstreifen mit mehreren Messgittern der eingangs geschilderten Art derart konstruktiv zu verändern, dass dieser kostengünstig hergestellt werden kann und dessen Messdaten zudem robust gegenüber einer Temperaturstörgröße ausgewertet werden können.

Die Erfindung löst die gestellte Aufgabe dadurch, dass das Substrat eine metallische Schicht und eine elektrisch isolierende Schicht aufweist, auf welche elektrisch isolierende Schicht diese beiden aus einem piezoresistiven Material bestehen Messgitter aufgedruckt sind.

Weist das Substrat eine metallische Schicht und eine elektrisch isolierende Schicht auf, auf welche elektrisch isolierende Schicht beide aus einem piezoresistiven Material bestehen Messgitter aufgedruckt sind, kann ein vergleichsweise einfach und reproduzierbar handzuhabendes Herstellungsverfahren ermöglicht werden, durch welches die Messgitter vergleichsweise nahe lateral nebeneinander vorsehbar sind. Diese sich ergebende räumliche Nähe der beiden Messgitter und insbesondere auch durch deren vergleichsweise gute thermische Kopplung über die metallische Schicht des Substrats kann in weiterer Folge von einer gleichen Temperaturstörgröße auf beide Messgitter ausgegangen werden. Dies eröffnet die Möglichkeit, über geeignete Verfahren, beispielsweise Messbrücken oder numerische Methoden, eine exakte Temperaturkompensation am Messergebnis des Dehnungsmessstreifens vorzunehmen.

Der erfindungsgemäße Dehnungsmessstreifen kann daher Temperaturstörgrößen robust gegenüberstehen, wodurch hohe Messgenauigkeit am Dehnungsmessstreifen sichergestellt werden kann.

Die Empfindlichkeit gegenüber einer Temperaturstörgröße kann weiter vermindert werden, wenn das zweite Messgitter zum ersten Messgitter rechtwinkelig orientiert als passives Messgitter zur Temperaturkompensation der Dehnungsmesswerte des ersten Messgitters ausgebildet ist, wofür beide Messgitter aus demselben piezoresistiven Material bestehen Durch die rechtwinklige Orientierung kann nämlich jenes Messgitter normal zur Orientierungsrichtung des Dehnungsmessstreifens frei von mechanischen Kräften gehalten werden und damit einzig der Aufnahme der Temperaturstörgröße dienen - wodurch beispielsweise mit einer Halb- oder Vollbrückenschaltung aus dem Messergebnis des ersten Messgitters der Temperatureinfluss verringert bzw. eliminiert werden kann. Dies kann weiter verbessert werden, wenn beide Messgitter aus demselben piezoresistiven Material bestehen

Die Sensitivität des Dehnungsmessstreifens kann weiter erhöht werden, wenn das erste und zweite Messgitter den gleichen Nennwiderstand aufweisen.

Die Temperaturbelastung auf beide Messgitter kann vorteilhaft aneinander angeglichen werden, wenn das erste und zweite Messgitter je zumindest einen mäanderförmig verlaufenden Gitterabschnitt aufweisen, wobei ein Gitterabschnitt des ersten Messgitters zwischen zwei Gitterabschnitten des zweiten Messgitters angeordnet ist. Erfindungsgemäß kann damit die Empfindlichkeit der Messergebnisse, z.B. erfasst über eine Messbrücke, gegenüber einer Temperaturstörgröße weiter reduziert werden, was zur Messgenauigkeit am Dehnungsmessstreifen beiträgt.

Die Konstruktion des Dehnungsmessstreifens kann vereinfacht werden, wenn jedes Messgitter mehrere mäanderförmig verlaufende Gitterabschnitte aufweist, welche Gitterabschnitte abwechselnd nacheinander angeordnet sind. Des Weiteren kann diese gleichmäßigere Verteilung der Gitterabschnitte dazu beitragen, dass beide Messgitter ähnlichere Temperaturbeaufschlagung unterliegen - womit eine genauere Kompensation in den Messdaten möglich werden kann.

Der genannte Vorteil kann besonders ausgeprägt sein, wenn ein Gitterabschnitt des ersten Messgitters mehrere, insbesondere zwei, nebeneinander verlaufende Mäanderreihen aufweist.

Beträgt das Verhältnis von mindestens einer Gitterlänge eines ersten Gitterabschnittes zu mindestens einer Gitterbreite eines zweiten Gitterabschnittes 1:0,75 bis 1:1,25, kann der Dehnmesstreifen robust gegenüber eine Temperaturstörgröße ausgewertet werden. Insbesondere ist dies erreichbar, wenn dieses Verhältnis 1:0,9 bis 1:1,1 beträgt, wovon sich als bevorzugt 1:1 herausstellen kann.

Sind die Gitterabschnitte der jeweiligen Messgitter gleich verlaufend ausgebildet, ist die Konstruktion des Dehnungsmessstreifens weiter vereinfachbar. Dies umso mehr, wenn die Gitterabschnitte der jeweiligen Messgitter gleich sind.

Die Empfindlichkeit gegenüber einer Temperaturstörgröße kann auch mit zwei aktiven Messgittern auf einem gemeinsamen Substrat verringert werden, wenn das erste und zweite Messgitter gleichorientiert sind und als aktive Messgitter je ein piezoresistives Material mit zueinander unterschiedlichen Temperaturkoeffizienten und zueinander unterschiedlichen Dehnungsfaktoren aufweisen.

Weisen das erste und zweite Messgitter je einen mäanderförmig verlaufenden Gitterabschnitt auf, ist die Konstruktion des Dehnungsmessstreifens weiter vereinfachbar - bzw. kann damit ein besonders kostengünstiger Mehrgitter-Dehnungsmessstreifen ermöglicht werden.

Ein kompakter und robuster Dehnungsmessstreifen kann erreicht werden, wenn die Gitterabschnitte ineinander angeordnet gleichverlaufend sind. Zudem ist es damit möglich, das Temperaturniveau der beiden Dehnungsmessstreifen aneinander anzupassen und damit eine Temperaturkompensation zu verbessern.

Vorstehend genannter Vorteil ergibt sich insbesondere dann, wenn die beiden Messgitter doppelmäanderförmig verlaufen - und somit eine gleiche Temperaturbelastung beider Messgitter sichergestellt werden kann. Der erfindungsgemäße Mehrgitter-Dehnungsmessstreifen kann in der Messdatenerfassung daher eine besonders hohe Genauigkeit gewährleisten.

Vorzugsweise können die Dehnungsmessstreifen bei einer Brückenschaltung verwendet werden. Hierbei ist eine Verschaltung der Dehnungsmessstreifen zu Halboder Vollbrücken denkbar.

Vorzugsweise ist die metallische Schicht des Substrats ein Aluminiumband oder Stahlband oder eine Platine aus Aluminium oder Stahl. Dies kann eine besonders gute thermische Kopplung zwischen den beiden Messgittern schaffen.

Vorzugsweise ist die elektrisch isolierende Schicht des Substrats ein Primer oder eine Isolierlackschicht oder eine organische oder anorganische Vorbeschichtung.

Die Konstruktionsverhältnisse für einen Dehnungsmessstreifen können durch ein Metallband mit einer Beschichtung vereinfacht werden, wenn dieses Metallband die metallische Schicht und dessen Beschichtung die elektrisch isolierende Schicht des Substrats ausbildet. Dadurch kann nicht nur die thermische Kopplung zwischen den Messgittern verbessert werden, sondern auch hinfällig werden, eine gesonderte Klebeschicht zwischen Prüfkörper und Messgitter vorgesehen zu müssen. Erfindungsgemäß kann so die Dehnung unvollständig vom Prüfobjekt auf den Dehnungsmessstreifen übertragen werde, was die Messgenauigkeit erhöhen kann.

In den Figuren ist beispielsweise der Erfindungsgegenstand anhand mehrerer Ausführungsvarianten näher dargestellt. Es zeigen

Fig. 1 eine Draufsicht auf einen Dehnungsmessstreifen mit mehreren Messgittern nach einem ersten Ausführungsbeispiel,

Fig. 1a eine teilweise aufgerissene Schnittansicht nach I-I der Fig. 1 und

Fig. 2 eine Draufsicht auf einen Dehnungsmessstreifen mit mehreren Messgittern nach einem zweiten Ausführungsbeispiel.

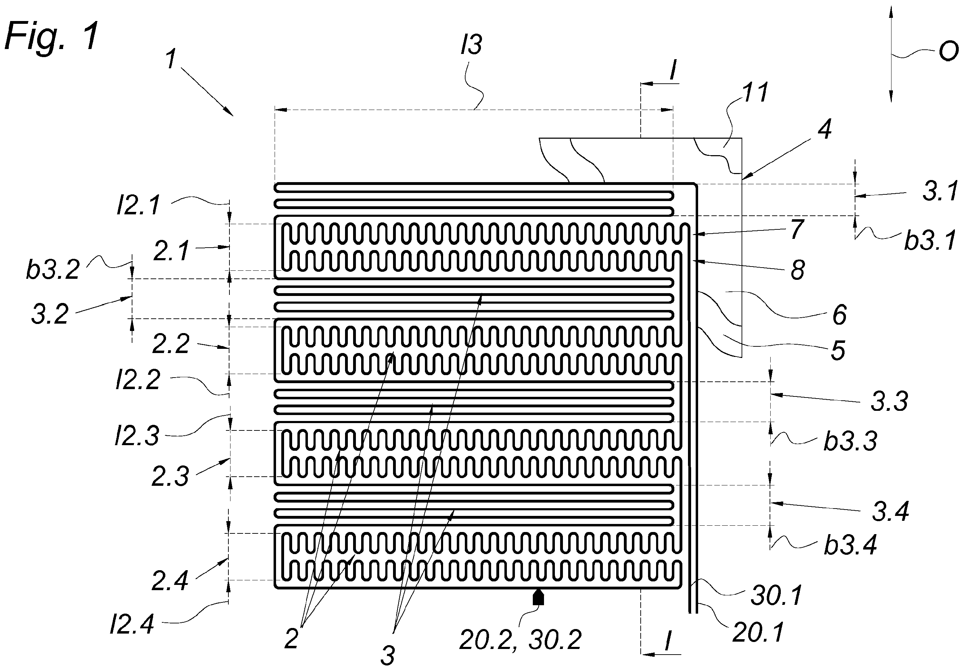

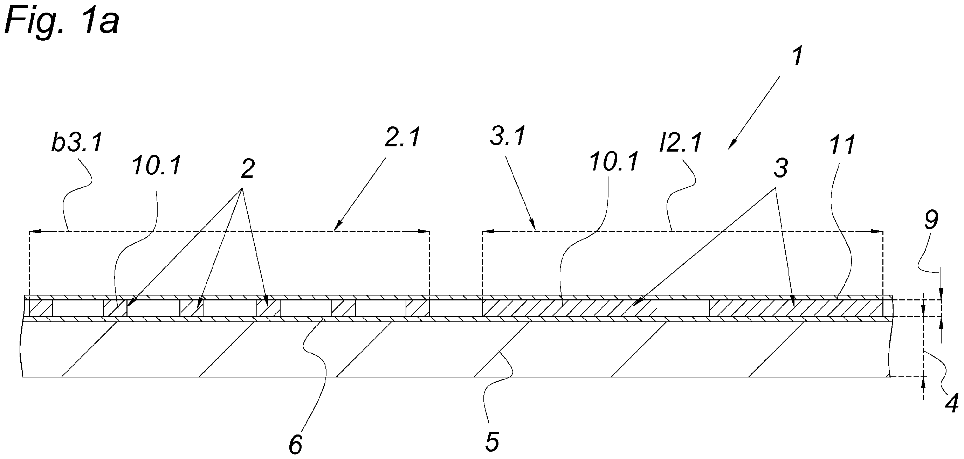

Der nach den Figuren 1 und 1a beispielsweise dargestellte Dehnungsmessstreifen 1 nach einem ersten Ausführungsbeispiel weist ein erstes Messgitter 2 sowie ein zweites Messgitter 3 auf. Das erste Messgitter 2 entwickelt sich zwischen den beiden Anschlüssen 20.1 und 20.2 - das zweite Messgitter 3 zwischen den beiden elektrischen Anschlüssen 30.1 und 30.2, wobei beide Messgitter 2, 3 endseitig an den Anschlüssen 20.2 und 30.2 kurzgeschlossen sind. Die beiden Messgitter 2, 3 sind auf einem Substrat 4 vorgesehen und in einer gemeinsamen Ebene 9 angeordnet. Wie in Fig. 1 und 1a zu erkennen, sind diese Messgitter 2, 3 lateral nebeneinander auf dem Substrat 4 vorgesehen.

Erfindungsgemäß weist das mehrschichtige Substrat 4 eine metallische Schicht 5 und eine elektrisch isolierende Schicht 6 auf. Diese elektrisch isolierende Schicht 6 kann beispielsweise ein Primer, oder eine Grundierung etc. eines Blechs, Bands, einer Platine, eines Spaltbands etc. sein, welches Blech, Band, Spaltband, Platine, etc. die metallische Schicht 5 ausbildet. Auf diesen beiden Messgitter 2, 3 ist beispielweise ein Decklack 11 vorgesehen.

Zudem werden die beiden Messgitter 2, 3 auf das Substrat 4, und zwar auf die elektrisch isolierende Schicht 6, aufgedruckt, wodurch diese kurzschlussfrei nahe nebeneinander vorgesehen werden können. Für das Ducken wird ein piezoresistives Material verwendet, beispielsweise silberbasierte oder graphitbasierte Pasten.

Der damit hergestellte Dehnungsmessstreifen 1 ist vergleichsweise kostengünstig und kann durch seine kompakte Ausführung auch Messdaten liefern, mit denen robust eine Temperaturstörgröße kompensierbar ist, beispielsweise über eine Brückenschaltung.

Wie nach Fig. 1 weiter zu erkennen, weisen die beiden Messgitter 2, 3 eine zueinander unterschiedliche Orientierung auf - im gegebenen Fall sind diese Messgitter 2, 3 rechtwinkelig orientiert. Damit wirkt das zweite Messgitter 3 bei mechanischer Belastung in Orientierungsrichtung O des ersten Messgitters 2 als passives Messgitter. Beide Messgitter 2, 3 bestehen aus demselben piezoresitiven Material und weisen vorzugsweise den gleichen Nennwiderstand R0 [Ω] auf. Damit kann das zweite, mechanisch unbelastete Messgitter 3 zur Temperaturkompensation der Dehnungsmesswerte des ersten Messgitters 2 herangezogen werden - beispielsweise, indem beide Messgitter 2, 3 im selben Halbbrückenzweig einer Halbbrücke vorgesehen werden.

Das Messgitter 2 bildet sich aus vier, elektrisch in Serie geschaltete und mäanderförmig verlaufende Gitterabschnitte 2.1, 2.2, 2.3 und 2.4. Derart kann eine besonders hohe Empfindlichkeit des ersten Messgitters 2 auf mechanische Belastungen in Orientierungsrichtung O erreicht werden.

Das Messgitter 3 bildet sich aus vier, elektrisch in Serie geschalteten und mäanderförmig verlaufenden Gitterabschnitten 3.1, 3.2, 3.3 und 3.4. Indem ein Gitterabschnitt 2.2 des ersten Messgitters 2 zwischen zwei Gitterabschnitten 3.1 und 3.2 des zweiten Messgitters 3 angeordnet ist, stellt sich ein nahezu gleicher Temperatureinfluss auf beide Messgitter 2 und 3 ein - womit sich unter Verwendung von Messgittern 2 und 3 in einer gemeinsamen nicht näher dargestellten Halbbrücke die Temperaturstörgröße auf das Messergebnis weitgehend minimieren lässt. Letztgenanntes ist besonders vorteilhaft erreicht, da die Gitterabschnitte 2.1, 2.2, 2.3, 2.4 und 3.1, 3.2, 3.3, 3.4 abwechselnd nebeneinander und aneinander anschließend angeordnet sind, wie dies in Fig. 1 erkannt werden kann.

Zudem zeigt sich nach Fig. 1, dass die Gitterabschnitte 2.1, 2.2, 2.3 und 2.4 des ersten Messgitters 2, je zwei, nebeneinander verlaufende Mäanderreihen 7, 8 aufweisen. Des Weiteren sind alle Gitterlängen l2.1, l2.2, l2.3, l2.4 der ersten Gitterabschnitte 2.1, 2.2, 2.3, 2.4 im Wesentlichen gleich lang wie alle Gitterbreiten b3.1, b3.2, b3.3, b3.4 der zweiten Gitterabschnitte 3.1, 3.2, 3.3, 3.4 - wodurch bevorzugte Voraussetzungen geschaffen werden, beide Messgitter 2, 3 auf einem gleichen Temperaturniveau zu halten.

Zudem sind die Gitterabschnitte 2.1, 2.2, 2.3, 2.4 bzw. 3.1, 3.2, 3.3, 3.4 der jeweiligen Messgitter 2, 3 gleich ausgebildet und weisen damit eine gleichen Verlauf auf, was die Konstruktion des Dehnungsmessstreifen 1 vereinfacht.

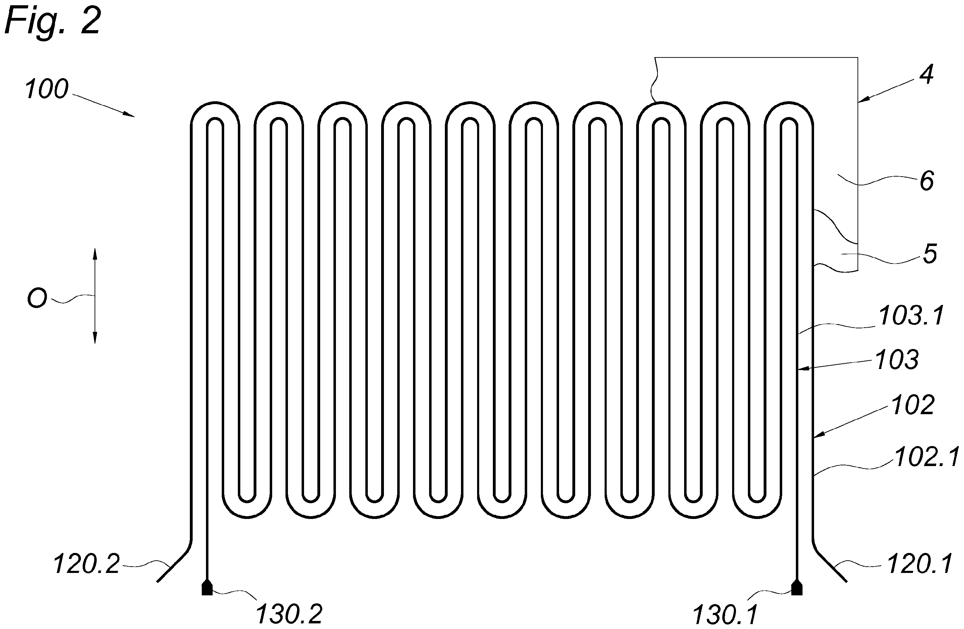

Gemäß Fig. 2 ist ein Dehnungsmessstreifen 100 nach einem zweiten Ausführungsbeispiel dargestellt. Dieser Dehnungsmessstreifen 100 weist ein erstes Messgitter 102 und ein zweites Messgitter 103 auf, die ineinander angeordnet sind bzw. die in ihren Verläufen ineinander greifen.

Das erste Messgitter 102 entwickelt sich zwischen den beiden Anschlüssen 120.1 und 120.2 und das zweite Messgitter 103 zwischen den beiden elektrischen Anschlüssen 130.1 und 130.2. Die beiden Messgitter 102, 103 sind in einer gemeinsamen Ebene 9 angeordnet - was beispielsweise ein mit einem Primer bzw. einer Grundierung als elektrische Isolierung 5 beschichtetes Blech 6 oder dgl. sein kann, wie dies bereits zum ersten Ausführungsbeispiel beschrieben ist.

Erfindungsgemäß werden die beiden Messgitter 102, 103 auf das Substrat 4 aufgedruckt, und zwar auf die elektrisch isolierende Schicht 6 des Substrats 4, welches Substrats 4 zudem noch eine metallische Schicht 5 aufweist. Dadurch können die beiden Messgitter 102, 103 kurzschlussfrei nahe aneinander vorgesehen werden können. Für das Drucken werden piezoresistive Materialien verwendet, beispielsweise eine silberbasierte Paste für das erste Messgitter 102 und eine graphitbasierte Paste für das zweite Messgitter 103.

Der damit hergestellte Dehnungsmessstreifen 100 ist vergleichsweise kostengünstig herstellbar und weist durch seine kompakte Ausführung auch eine besonders gleichmäßige Temperaturbelastung beider Messgitter auf. Numerische Kompensationsverfahren können damit die Temperaturstörgröße aus den Messergebnissen des Dehnungsmessstreifens 100 robust entfernen.

Entsprechend Fig. 2 sind das erste und zweite Messgitter 102, 103 gleichorientiert, sodass diese beiden Messgitter 102, 103 als aktive Messgitter bei mechanischer Belastung in dieselbe Orientierungsrichtung O Messdaten aufnehmen. Beide Messgitter unterliegen daher derselben Temperaturstörgröße und der gleichen Dehnung.

Zu der Kompensation der Temperaturstörgröße weisen die piezoresistiven Materialien der Messgitter 102, 103 zueinander unterschiedlichen Temperaturkoeffizienten (α2, α3) und zueinander unterschiedliche Dehnungsfaktoren (k-Faktoren: k1, k2) auf. Durch diese Unterschiede ist der Temperatureinfluss im Messergebnis kompensierbar.

Für eine numerische Kompensation der Temperaturstörgröße werden die Widerstände $R_{102}$ und $R_{103}$ der Messgitter 102 und 103 mit einem geeigneten Verfahren, im einfachsten Fall mit einem Widerstandsmessgerät, gemessen.

Für jedes der Messgitter lässt sich sein Widerstand, unter Vernachlässigung von Temperatur- und Dehnungsabhängigkeiten höherer Ordnung, formal beschreiben durch

$$R(\varepsilon, T) = R_{T_0}\big(1 + k\,\varepsilon + \alpha_1(T - T_0)\big).$$

Hierbei ist $R_{T_0}$ der Nennwiderstand des jeweiligen Messgitters ohne Dehnung bei einer Referenztemperatur $T_0$, $k$ der $k$-Faktor, $\alpha$ der Temperaturkoeffizient, $\varepsilon$ die Dehnung und T die Temperatur des Messgitters. Angewandt auf die Messgitter 102 und 103 ergibt sich damit ein Gleichungssystem, bestehend aus zwei Gleichungen und den zwei unbekannten Größen Temperatur und Dehnung:

$$R_{102}(\varepsilon, T) = R_{102,T_0}(1 + k_1\varepsilon + \alpha_1(T - T_0))$$

$$R_{103}(\varepsilon, T) = R_{103,T_0}(1 + k_2\varepsilon + \alpha_2(T - T_0))$$

Durch Lösung dieses Gleichungssystems lassen sich die gemeinsame Temperatur und Dehnung der Messgitter 102 und 103 berechnen.

Ein in den Messdaten exakter Dehnungsmessstreifen 100 ist damit geschaffen.

Wie zudem der Fig. 2 zu entnehmen ist, weisen das erste und zweite Messgitter 102, 103 je einen einzigen mäanderförmig verlaufenden Gitterabschnitt 102.1, 103.1 auf. Diese Gitterabschnitt 102.1, 103.1 sind ineinander angeordnet gleichverlaufend, wodurch die beiden Messgitter 102, 103 doppelmäanderförmig verlaufen.

## Patentansprüche

1. Dehnungsmessstreifen mit einem ersten Messgitter (2, 102), mit einem zweiten Messgitter (3, 103) und mit einem Substrat (4), auf dem diese beiden Messgitter (2, 3 bzw. 102, 103) in einer gemeinsamen Ebene (9) angeordnet sind, **dadurch gekennzeichnet, dass** das Substrat (4) eine metallische Schicht (5) und eine elektrisch isolierende Schicht (6) aufweist, auf welche elektrisch isolierende Schicht (6) diese beiden aus einem piezoresistiven Material (10.1, 10.2) bestehen Messgitter (2, 3 bzw. 102, 103) aufgedruckt sind.

2. Dehnungsmessstreifen nach Anspruch 1, **dadurch gekennzeichnet, dass** das zweite Messgitter (3) zum ersten Messgitter (2) rechtwinkelig orientiert als passives Messgitter (3) zur Temperaturkompensation der Dehnungsmesswerte des ersten Messgitters (2) ausgebildet ist, wofür beide Messgitter (2, 3) aus demselben piezoresistiven Material (10) bestehen.

3. Dehnungsmessstreifen nach Anspruch 2, **dadurch gekennzeichnet, dass** das erste und zweite Messgitter (2, 3) den gleichen Nennwiderstand (Ro) aufweisen.

4. Dehnungsmessstreifen nach einem der Ansprüche 2 bis 3, **dadurch gekennzeichnet, dass** das erste und zweite Messgitter (2, 3) je zumindest einen mäanderförmig verlaufend Gitterabschnitt (2.1, 2.2, 2.3, 2.4 bzw. 3.1, 3.2, 3.3, 3.4) aufweisen, wobei ein Gitterabschnitt (2.1, 2.2, 2.3) des ersten Messgitters (2) zwischen zwei Gitterabschnitten (3.1, 3.2 bzw. 3.2, 3.3 bzw. 3.3, 3.4) des zweiten Messgitters (3) angeordnet ist.

5. Dehnungsmessstreifen nach Anspruch 4, **dadurch gekennzeichnet, dass** jedes Messgitter (2, 3) mehrere mäanderförmig verlaufende Gitterabschnitte (2.1, 2.2, 2.3, 2.4 bzw. 3.1, 3.2, 3.3, 3.4) aufweist, welche Gitterabschnitte (2.1, 2.2, 2.3, 2.4 bzw. 3.1, 3.2, 3.3, 3.4) abwechselnd nacheinander angeordnet sind.

6. Dehnungsmessstreifen nach Anspruch 4 oder 5, **dadurch gekennzeichnet, dass** ein Gitterabschnitt (2.1, 2.2, 2.3, 2.4) des ersten Messgitters (2) mehrere, insbesondere zwei, nebeneinander verlaufende Mäanderreihen (7, 8) aufweist.

7. Dehnungsmessstreifen nach einem der Ansprüche 4 bis 6, **dadurch gekennzeichnet, dass** das Verhältnis von mindestens einer Gitterlänge (l2.1, l2.2, l2.3, l2.4) eines ersten Gitterabschnittes (2.1, 2.2, 2.3, 2.4) zu mindestens einer Gitterbreite (b3.1, b3.2, b3.3, b3.4) eines zweiten Gitterabschnittes (3.1, 3.2, 3.3, 3.4) 1:0,75 bis 1:1,25, bevorzugt 1:0,9 bis 1:1,1, insbesondere 1:1, beträgt.

8. Dehnungsmessstreifen nach einem der Ansprüche 4 bis 7, **dadurch gekennzeichnet, dass** die Gitterabschnitte (2.1, 2.2, 2.3, 2.4 bzw. 3.1, 3.2, 3.3, 3.4) der jeweiligen Messgitter (2, 3) gleich verlaufend ausgebildet, insbesondere gleich, sind.

9. Dehnungsmessstreifen nach Anspruch 1, **dadurch gekennzeichnet, dass** das erste und zweite Messgitter (102, 103) gleichorientiert sind und als aktive Messgitter (102, 103) je ein piezoresistives Material mit zueinander unterschiedlichen Temperaturkoeffizienten ($\alpha_1$, $\alpha_2$) und zueinander unterschiedlichen Dehnungsfaktoren (k1, k2) aufweisen.

**10.** Dehnungsmessstreifen nach Anspruch 9, **dadurch gekennzeichnet, dass** das erste und zweite Messgitter (102, 103) je einen mäanderförmig verlaufende Gitterabschnitt (102.1, 103.1) aufweisen.

**11.** Dehnungsmessstreifen nach Anspruch 10, **dadurch gekennzeichnet, dass** die Gitterabschnitte (102.1, 103.1) ineinander angeordnet gleichverlaufend sind.

**12.** Dehnungsmessstreifen nach einem der Ansprüche 9 bis 11, **dadurch gekennzeichnet, dass** die beiden Messgitter (102, 103) doppelmäanderförmig verlaufen.

**13.** Dehnungsmessstreifen nach einem der Ansprüche 1 bis 12, **dadurch gekennzeichnet, dass** die metallische Schicht (4.1) des Substrats (4) ein Aluminiumband oder Stahlband oder eine Platine aus Aluminium oder Stahl ist.

**14.** Dehnungsmessstreifen nach einem der Ansprüche 1 bis 13, **dadurch gekennzeichnet, dass** die elektrisch isolierende Schicht (6) des Substrats (4) ein Primer oder eine Isolierlackschicht oder eine organische oder anorganische Vorbeschichtung ist.

**15.** Metallband mit einer Beschichtung für einen Dehnungsmessstreifen nach einem der Ansprüche 1 bis 14, wobei das Metallband die metallische Schicht (5) des Substrats (4) und dessen Beschichtung die elektrisch isolierende Schicht (6) des Substrats (4) ausbildet.

Fig. 1

EP 3 410 060 A1

Fig. 1a

EP 3 410 060 A1

*Fig. 2*

EP 3 410 060 A1

Europäisches
Patentamt

European
Patent Office

Office européen
des brevets

# EUROPÄISCHER RECHERCHENBERICHT

**Nummer der Anmeldung**

EP 17 17 3327

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2017/028466 A1 (INST OF CEOLOGY AND GEOPHYSICS CHINESE ACAD OF SCIENCES [CN]) 23. Februar 2017 (2017-02-23) | 1-4 | INV. G01B7/16 G01L1/18 |
| Y | * Abbildungen 3,4,5,6 * ----- | 1-15 | |
| Y | US 4 430 895 A (COLTON RUSSELL F [US]) 14. Februar 1984 (1984-02-14) * Spalte 3, Zeile 56 - Zeile 58; Abbildungen 1-3 * * Spalte 4, Zeile 56 - Spalte 5, Zeile 15 * * Spalte 6, Zeile 13 - Zeile 29 * ----- | 1-15 | |
| X | WO 2007/062813 A1 (HOTTINGER MESSTECHNIK BALDWIN [DE]; RUPPIN HAGEN [DE]; BREITWIESER WER) 7. Juni 2007 (2007-06-07) | 15 | |
| Y | * Seite 5, Absatz 2; Abbildung 1 * ----- | 1-15 | |

**RECHERCHIERTE SACHGEBIETE (IPC)**

G01B
G01L
G01M

Der vorliegende Recherchenbericht wurde für alle Patentansprüche erstellt

| Recherchenort | Abschlußdatum der Recherche | Prüfer |
|---|---|---|
| München | 25. Oktober 2017 | Grand, Jean-Yves |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 17 3327

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2017

| Im Recherchenbericht angeführtes Patentdokument | Datum der Veröffentlichung | Mitglied(er) der Patentfamilie | Datum der Veröffentlichung |
|---|---|---|---|
| WO 2017028466 A1 | 23-02-2017 | CN 105241369 A<br>WO 2017028466 A1 | 13-01-2016<br>23-02-2017 |
| US 4430895 A | 14-02-1984 | KEINE | |
| WO 2007062813 A1 | 07-06-2007 | KEINE | |

Für nähere Einzelheiten zu diesem Anhang : siehe Amtsblatt des Europäischen Patentamts, Nr.12/82

EPO FORM P0461